# EUROPÄISCHE PATENTSCHRIFT

(11) **EP 3 945 237 B1**
(45) Veröffentlichungstag und Bekanntmachung des Hinweises auf die Patenterteilung: **17.07.2024**
(21) Anmeldenummer: 20188684.3
(22) Anmeldetag: 30.07.2020
(51) Int. Cl.: F16P 3/14

(54) **ÜBERWACHUNGSEINRICHTUNG UND EIN VERFAHREN ZUM BETRIEB EINER ÜBERWACHUNGSEINRICHTUNG**
MONITORING DEVICE AND METHOD FOR OPERATING SAME
DISPOSITIF DE SURVEILLANCE ET PROCÉDÉ DE FONCTIONNEMENT D'UN DISPOSITIF DE SURVEILLANCE

(43) Veröffentlichungstag der Anmeldung: 02.02.2022
(73) Patentinhaber: Leuze electronic GmbH + Co. KG, 73277 Owen/Teck (DE)
(72) Erfinder: Feller, Bernhard, 86316 Friedberg (DE); Eder, Alexander, 86928 Hofstetten (DE); Rohbeck, Volker, 85244 Röhrmoos (DE); Jüttner, Andreas, 81543 München (DE)
(74) Vertreter: Ruckh, Rainer Gerhard

(56) Entgegenhaltungen:
- EP-A1- 3 633 413
- DE-A1- 102016 116 828
- JP-A- 2010 133 503

## Beschreibung

Die Erfindung betrifft eine Überwachungseinrichtung gemäß dem Oberbegriff des Anspruchs 1.

Derartige Überwachungseinrichtungen werden im Bereich der Sicherheitstechnik eingesetzt, wobei generell mit dem Sicherheitssensor eine Gefahrenbereichsüberwachung einer gefahrbringenden Anlage durchgeführt wird, wobei der Begriff Anlage generell auch Maschinen, Roboter und dergleichen erfasst.

Insbesondere wird die Überwachungseinrichtung als Zugangssicherung zu einem Gefahrenbereich einer Anlage eingesetzt, wobei der Zugang zu dem Gefahrenbereich über eine Fördereinrichtung erfolgt.

Die Überwachungseinrichtung weist typischerweise als Sicherheitssensor einen Lichtvorhang auf, mit dem ein in einer Ebene liegendes Schutzfeld überwacht wird. Der Lichtvorhang generiert ein Schaltsignal, dessen Schaltzustände angeben ob ein Objekt im Schutzfeld vorhanden ist oder nicht. Wird mit dem Lichtvorhang ein Objekt im Schutzfeld detektiert wird durch das entsprechende Schaltsignal eine Sicherheitsfunktion ausgelöst. Beispielsweise wird mit dem Schaltsignal einer Steuereinheit der Anlage angesteuert, wodurch diese stillgesetzt wird, sodass keine Gefahren mehr von der Anlage ausgehen können.

Auf der Fördereinrichtung werden generell auch zulässige Objekte wie auf Paletten gelagerte Transportgüter der Anlage zugeführt, die zur Durchführung von Arbeitsvorgängen der Anlage benötigt werden. Da derartige zulässige Objekte nicht sicherheitskritisch sind, würde eine Auslösung der Sicherheitsfunktion bei der Bewegung zulässiger Objekte durch das Schutzfeld des Lichtvorhangs zu einem unnötigen Stillstand der Maschine führen.

Um dies zu vermeiden sind bei bekannten Überwachungseinrichtungen in Förderrichtungen dem Sicherheitssensor Mutingsensoren vorgeordnet. Wird mit den Mutingsensoren ein Objekt als zulässiges Objekt erkannt, wird der Sicherheitssensor für eine vorgegebene Zeitdauer überbrückt, sodass dieser nicht mehr zur Auslösung der Sicherheitsfunktion führt, wenn das zulässige Objekt das Schutzfeld passiert.

Derartige Mutingsensoren sind typischerweise von Lichtschrankenanordnungen gebildet. Mit derartigen Lichtschrankenanordnungen können zulässige Objekte oft nicht zuverlässig erkannt werden.

Zudem ist nachteilig, dass die Abstimmung des Timings und der Auswertung der Signale der Mutingsensoren ungenau ist, da aus den Zeitpunkten der Objektdetektionen der Mutingsensoren anhand der Fördergeschwindigkeit hochgerechnet werden muss, welche Zeitspanne vergeht, bis das zulässige Objekt tatsächlich den Sicherheitssensor passiert hat. Die tatsächliche Fördergeschwindigkeit ist jedoch nicht immer exakt einstellbar oder exakt bekannt.

Weiterhin ist es bekannt, ein Muting des Sicherheitssensors abhängig von einem externen Steuersignal zu generieren. Dieses Signal kann beispielsweise von der Steuerung der Fördereinrichtung, welches zulässige Objekte transportiert, generiert werden.

Das Muting des Sicherheitssensors wird bevorzugt mit dem Beginn des externen Steuersignals gestartet. Als Bedingung für das Aufrechterhalten des Mutings kann als Forderung definiert sein, dass innerhalb eines bestimmten Zeitintervalls nach Beginn des Steuersignals der Sicherheitssensor im Schutzfeld einen Objekteingriff registriert.

Die EP 3 633 413 A1 betrifft eine Sicherheitsanordnung mit einem Lichtvorhang zur Erfassung von Objekten in einem Überwachungsbereich mit einer Anordnung von Strahlachsen, welche jeweils von einem Lichtstrahlen emittierenden Sender und wenigstens einem zugeordneten Empfänger gebildet sind. Mit den Strahlachsen ist der Überwachungsbereich überwacht oder mit einem Flächen-Scanner, bei welchem von einem Sender emittierte Lichtstrahlen den Überwachungsbereich überstreichen. Der Überwachungsbereich ist in wenigstens einen Schutzbereich und wenigstens einen Muting-Steuerbereich unterteilt, wobei abhängig von Objektdetektion im Muting-Steuerbereich Muting-Funktionen steuerbar sind. Bei einer Objektdetektion im Schutzbereich ist nur dann ein Sicherheitsausgangssignal generiert, wenn kein Muting aktiviert ist.

Die JP 2010 133 503 A betrifft ein Sicherheitssystem mit einem Lichtvorhang und einem Muting-Sensor, der an einen Controller angeschlossen ist. Der Muting-Sensor umfasst eine Schreib- Leseeinheit, mittels derer RFID-Tags auf Werkstücken gelesen werden.

Die DE 10 2016 116 828 A1 betrifft einen Sicherheitslichtvorhang zur Überwachung eines Gefahrenbereichs einer Maschine oder Anlage, umfassend eine Sendeeinheit mit einer Vielzahl von Lichtstrahlen emittierenden Lichtsendern und einer Empfangseinheit mit einer Vielzahl von Lichtstrahlen empfangenden Lichtempfängern zur Überwachung eines Schutzfeldes. Eine Steuer- und Auswerteeinheit ist ausgebildet, bei Erfassung eines unzulässigen Objektes im Schutzfeld als Sicherheitsfunktion ein Abschaltsignal für die Maschine oder Anlage zu generieren. Die Steuer- und Auswerteeinheit ist ausgebildet, bei Erfassung eines zulässigen Objektes einen Überbrückungsteilbereich zu aktivieren und kein Abschaltsignal zu erzeugen, solange das zulässige Objekt innerhalb des Überbrückungsteilbereiches ist, wobei eine Unterbrechung eines Lichtstrahls in mindestens einem vorbestimmten ersten Teilbereich des Sicherheitslichtgitters eine Detektion eines zulässigen Objektes ist.

Der Erfindung liegt die Aufgabe zugrunde eine Überwachungseinrichtung der eingangs genannten Art bereitzustellen, welche bei konstruktiv einfachem Aufbau eine hohe Funktionalität und gleichzeitig eine hohe Funktionssicherheit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sensor, mittels dessen eine Objektüberwachung in einem Schutzfeld durchgeführt wird. Bei Registrieren eines Objekteingriffs wird im Schutzfeld eine Sicherheitsfunktion ausgelöst. Weiterhin sind Mittel zur Generierung einer Überbrückungsfunktion vorgesehen, mittels derer wenigstens ein Teil des Schutzfelds überbrückt wird, sodass dort ein Objekteingriff nicht zur Auslösung der Sicherheitsfunktion führt. Weiterhin sind Sensormittel zur Wegerfassung einer beweglichen Einheit vorgesehen, in dem wiederkehrend in deren Erfassungsbereich geführte Markierungselemente der beweglichen Einheit detektiert werden, wobei die Überbrückungsfunktion anhand der Wegerfassung gesteuert und/oder überwacht ist.

Die Erfindung betrifft weiterhin ein entsprechendes Verfahren.

Die erfindungsgemäße Überwachungseinrichtung wird generell für eine Gefahrenbereichsüberwachung an einer gefahrbringenden Anlage eingesetzt. Besonders vorteilhaft wird die Überwachungseinrichtung als Zugangssicherung zu einem Gefahrenbereich eingesetzt, wobei der Zugang zum Gefahrenbereich insbesondere über eine Transporteinrichtung erfolgt.

Die erfindungsgemäße Überwachungseinrichtung bildet hierzu vorteilhaft ein Sicherheitssystem, das die Sicherheitsanforderungen für einen Einsatz in sicherheitsrelevanten Applikationen, insbesondere im Bereich des Personenschutzes erfüllt.

Die Komponenten des Sicherheitssystems weisen hierzu einen fehlersicheren Aufbau auf. Dies wird insbesondere durch einen redundanten, mehrkanaligen Aufbau der Auswerteeinheit des Sensors erreicht, so dass der Sensor einen Sicherheitssensor bildet.

Die Überwachungseinrichtung umfasst vorteilhaft eine Steuerung, die insbesondere zur Steuerung der mit dem Sensor überwachten Anlage dient. Die Steuerung ist dann als Sicherheitssteuerung ausgebildet und weist ebenfalls einen redundanten, mehrkanaligen Aufbau auf.

Als zentrale Sicherheitskomponente der Überwachungseinrichtung ist der insbesondere als Sicherheitssensor ausgebildete Sensor vorgesehen, mit dem ein Schutzfeld überwacht wird, das vorteilhaft in einer Ebene verläuft.

Der Sicherheitssensor generiert ein binäres Schaltsignal, dessen Schaltzustände angeben, ob sich ein Objekt im Schutzfeld befindet oder nicht. Wird mit dem Sicherheitssensor ein Objekteingriff im Schutzfeld registriert, wird durch das Schaltsignal eine Sicherheitsfunktion ausgelöst, beispielsweise die Anlage stillgesetzt, sodass von dieser keine Gefahren mehr ausgehen können.

Um ein unnötiges Stillsetzen der Anlage zu vermeiden, wenn zulässige Objekte, wie zum Beispiel der Anlage zuzuführende Transportgüter, durch das Schutzfeld in den Gefahrenbereich der Anlage gefördert sollen, ist eine Überbrückungsfunktion, das heißt eine Mutingfunktion vorgesehen. Bei aktivierter Mutingfunktion wird der Sicherheitssensor vollständig oder partiell überbrückt, das heißt gemutet, sodass das Transportgut das Schutzfeld passieren kann, ohne dass der Sicherheitssensor die Sicherheitsfunktion auslöst.

Bei einem vollständigen Muting ist der gesamte Sicherheitssensor überbrückt. Bei einem partiellen Muting wird nur ein Teil des Schutzfeldes überbrückt, insbesondere der Teil, in dem das zulässige Objekt erwartet beziehungsweise detektiert wird.

Erfindungsgemäß erfolgt durch Sensormittel eine Wegerfassung einer beweglichen Einheit, die generell zur Zuführung von zulässigen Objekten in den Gefahrenbereich der Anlage ausgebildet ist, wobei die zulässigen Objekte dabei das vom Sicherheitssensor überwachte Schutzfeld passieren.

Durch die Wegerfassung mittels der Sensormittel wird die Überbrückungsfunktion, das heißt Mutingfunktion gesteuert und/oder überwacht. Dadurch wird die Sicherheit und Zuverlässigkeit der Mutingfunktion erheblich erhöht.

Vorteilhaft ist die bewegliche Einheit von einer Transporteinrichtung gebildet. Erste Sensormittel sind vorgesehen, mittels derer durch Erfassung von Markierungselementen an der Transporteinrichtung oder an einem Antriebsstrang der Transporteinrichtung eine inkrementelle Wegerfassung durchgeführt wird.

Ergänzend sind vorteilhaft zweite Sensormittel vorgesehen, mittels derer durch Erfassung von Referenzelementen eine absolute Wegreferenz generiert wird.

Dabei sind vorteilhaft die Referenzelemente von Elementen von auf der Transporteinrichtung transportierten zulässigen Objekten wie zum Beispiel Transportgestellen oder Behältern für diese Objekte gebildet, wobei die Überbrückungsfunktion so ausgebildet ist, dass die zulässigen Objekte das Schutzfeld passieren, ohne dass die Sicherheitsfunktion ausgelöst wird.

Mit den so ausgebildeten Sensormitteln kann die Position eines zulässigen Objekts zuverlässig detektiert und ausgehend hiervon der Weg, den das zulässige Objekt bis zum Sicherheitssensor zurücklegt, bestimmt werden. Somit kann die Mutingfunktion exakt an den Bewegungsablauf des zulässigen Objekts angepasst werden, wobei die Mutingfunktion vorteilhaft dann aktiviert ist, wenn das zulässige Objekt das Schutzfeld passiert, wodurch eine unnötige Auslösung der Sicherheitsfunktion durch das zulässige Objekt vermieden wird.

Der Sicherheitssensor kann als optischer Sensor oder Radarsensor ausgebildet sein.

Gemäß einer vorteilhaften Ausführungsform ist der optische Sensor ein Flächendistanzsensor oder ein Lichtvorhang.

Gemäß einer vorteilhaften Ausgestaltung sind die Sensormittel in Form von optischen, magnetischen, induktiven oder kapazitiven Sensormitteln ausgebildet.

Des Weiteren können akustische Sensormittel, wie Ultraschallsensoren, optische Taster oder Radarsensoren mit Auswertung der reflektierten Frequenz verwendet werden. Hierbei kann die Geschwindigkeit des Transportmittels sehr einfach über Dopplereffekte ermittelt werden.

Mit den so ausgebildeten Sensormitteln können die jeweiligen Markierungselemente und Referenzelemente berührungslos erfasst werden.

Gemäß einer vorteilhaften Ausführungsform sind die Markierungselemente und/oder die ersten Sensormittel für eine Richtungserkennung der beweglichen Einheit ausgebildet.

Hierzu können Markierungselemente eine Folge von Geometriestrukturelementen und/oder Materialstrukturelementen aufweisen, die mittels der ersten Sensormittel seriell erfasst werden.

Alternativ oder zusätzlich können die ersten Sensormittel jeweils wenigstens zwei in Bewegungsrichtung der beweglichen Einheit hintereinander angeordnete Sensorelemente aufweisen.

Damit kann nicht nur eine Wegerfassung, sondern auch eine Richtungserkennung der beweglichen Einheit, das heißt der Transporteinrichtung durchgeführt werden.

Schließlich wird vorteilhaft auch anhand von Sensorsignalen der Sensormittel die Geschwindigkeit der beweglichen Einheit ermittelt.

Hierzu ist es vorteilhaft, dass die Sensormittel pulsförmige Sensorsignale generieren.

Aus der zeitlichen Folge der pulsförmigen Sensorsignale, die bei der Erfassung der Markierungselemente erhalten werden, lässt sich einfach die Geschwindigkeit der beweglichen Einheit, auch der Transporteinrichtung, ermittelt.

Generell umfasst die Steuerung der Überbrückungsfunktion ein Einleiten und/ oder Beenden eines Mutings.

Diese Steuerung erfolgt derart, dass ein zulässiges Objekt auf der Transporteinrichtung durch das Schutzfeld gefördert wird, ohne dass der Sicherheitssensor die Sicherheitsfunktion auslöst.

Gemäß einer vorteilhaften Weiterbildung umfasst die Steuerung der Überbrückungsfunktion die Vorgabe unterschiedliche überbrückter Teil-Schutzfelder.

Besonders vorteilhaft wird ein Muting nur dann aufrechterhalten, wenn abhängig von mit den Sensormitteln bestimmten Wegsignalen eine bestimmte Folge von Schutzfeld-Unterbrechungsmustern registriert wird.

Der überbrückte Teil des Schutzfelds ist dabei fortlaufend an die Kontur des durch das Schutzfeld geführten zulässigen Objekts angepasst, wodurch einerseits gewährleistet ist, dass das Eindringen des zulässigen Objekts in das Schutzfeld nicht zur Auslösung der Sicherheitsfunktion führt. Andererseits ist der nicht von zulässigen Objekten erfasste Bereich des Schutzfelds nicht überbrückt, so dass dort Objekteingriffe zur Auslösung der Schutzfelder führen. Dadurch wird die Sicherheit der Überwachungseinrichtung weiter erhöht, da insbesondere Manipulationen derart, dass einer Person auf den zulässigen Objekten sitzend versucht, unbemerkt das Schutzfeld des Sicherheitssensors zu passieren, erkannt werden und zur Auslösung der Sicherheitsfunktion führen.

Gemäß einer ersten Variante der Erfindung erfolgt die Steuerung der Überbrückungsfunktion abhängig von mit den Sensormitteln generierten Weg-, Geschwindigkeits- und/oder Richtungssignalen.

In diesem Fall erfolgt die Steuerung der Überbrückungsfunktion direkt abhängig von der mit den Sensormitteln durchgeführten Wegerfassung, wobei mit dieser insbesondere die Zuführung eines zulässigen Objekts zum Schutzfeld des Sicherheitssensors erfasst wird. Durch eine zusätzliche Richtungserkennung und Geschwindigkeitsbestimmung wird die Zuverlässigkeit der Erfassung der Bewegung der Transporteinrichtung und insbesondere eines auf dieser transportierten zulässigen Objekte weiter erhöht.

Gemäß einer zweiten Variante der Erfindung erfolgt die Steuerung der Überbrückungsfunktion abhängig von externen Signalen einer Steuerung der Überbrückungsfunktion und/oder von Mutingsensoren.

Ebenso kann die Steuerung der Überbrückungsfunktion abhängig von Sensorsignalen des Sensors erfolgen.

In diesem Fall werden Signale zur Steuerung der Überbrückungsfunktion durch Wegerfassung mittels der Sensormittel überwacht.

Durch die mit den Sensormitteln durchgeführte Wegerfassung wird damit eine Kontrolle der Mutingfunktion erzielt, wodurch die Sicherheit der Überwachungseinrichtung erhöht wird.

Gemäß einer vorteilhaften Ausführungsform ist bei der erfindungsgemäßen Überwachungseinrichtung ein Mutingtimeout vorgesehen. Mit dem Mutingtimeout wird generell eine Kontrollfunktion des Mutings bereitgestellt. Wird das Muting aufgrund eines Fehlers der Überwachungseinrichtung nicht zu der vorgesehenen Zeit beendet und dauert somit zu lange, können Gefahrensituationen derart entstehen, dass Personen oder sicherheitskritische Objekte ohne Auslösen der Sicherheitsfunktion durch das Schutzfeld des Sicherheitssensors in den Gefahrenbereich der Anlage gelangen.

Um derartige Gefahrensituationen wird durch das Mutingtimeout die Dauer des Mutings auf einen Höchstwert begrenzt.

In bekannter Weise kann ein zeitbezogenes Mutingtimeout vorgesehen sein, das heißt es wird eine maximale Mutingzeitdauer definiert.

Da bei der erfindungsgemäßen Überwachungseinrichtung mit den Sensormitteln eine Wegerfassung durchgeführt wird, kann statt der Vorgabe des Mutingtimeouts auch ein Wegfenster vorgegeben und überwacht werden.

Vorteilhaft kann ein zeitfensterüberwachtes Mutingtimeout ausgesetzt werden, wenn eine aus Sensorsignalen bestimmte Geschwindigkeit der beweglichen Einheit einen Grenzwert unterschreitet.

Die Erfindung wird im Folgenden anhand der Zeichnungen erläutert. Es zeigen:
- Figur 1:: Erstes Ausführungsbeispiel eines Sensors der erfindungsgemäßen Überwachungseinrichtung.
- Figur 2:: Zweites Ausführungsbeispiel eines Sensors der erfindungsgemäßen Überwachungseinrichtung.
- Figur 3a:: Drittes Ausführungsbeispiel eines Sensors der erfindungsgemäßen Überwachungseinrichtung.
- Figur 3b:: Viertes Ausführungsbeispiel eines Sensors der erfindungsgemäßen Überwachungseinrichtung.
- Figur 4:: Ausführungsbeispiel der erfindungsgemäßen Überwachungseinrichtung.
- Figur 5a:: Erstes Beispiel einer Wegerfassung an einer Transporteinrichtung der Überwachungseinrichtung gemäß Figur 4 mittels Sensormittel.
- Figur 5b:: Beispiel einer Geschwindigkeits-/Wegerfassung mit Radar-, Schall-, oder Optik-Wellen.
- Figur 6a,b:: Zeitabhängige Signalverläufe der Sensorsignale der Sensormittel der Anordnung gemäß Figur 5.
- Figur 7:: Zweites Beispiel einer Wegerfassung an einer Transporteinrichtung der Überwachungseinrichtung gemäß Figur 4 mittels Sensormittel.
- Figur 8:: Zeitabhängige Signalverläufe der Sensorsignale der Sensormittel der Anordnung gemäß Figur 7.
- Figur 9:: Drittes Beispiel einer Wegerfassung an einer Transporteinrichtung der Überwachungseinrichtung gemäß Figur 4 mittels Sensormittel.
- Figur 10a,b:: Zeitabhängige Signalverläufe der Sensorsignale der Sensormittel gemäß Figur 9.
- Figur 11:: Beispiel eines Zahnriemenantriebs für die Referenzelement der Überwachungseinrichtung gemäß Figur 4.
- Figur 12a-g:: Unterschiedliche Markierungselemente für die Anordnung gemäß Figur 11.
- Figur 13:: Blockschaltbild eines weiteren Ausführungsbeispiels der Überwachungseinrichtung.
- Figur 14a-c:: Zeitabhängige Signalverläufe für die Überwachungseinrichtung gemäß Figur 13.
- Figur 15a-d:: Zeitabhängige Signalverläufe für die Überwachungseinrichtung gemäß Figur 13.
- Figur 16a-d:: Zeitabhängige Signalverläufe für die Überwachungseinrichtung gemäß Figur 13.
- Figur 17:: Variante der Ausführungsform gemäß Figur 13.
- Figur 18:: Weiteres Ausführungsbespiel der Überwachungseinrichtung.
- Figur 19:: Weiteres Ausführungsbespiel der Überwachungseinrichtung.

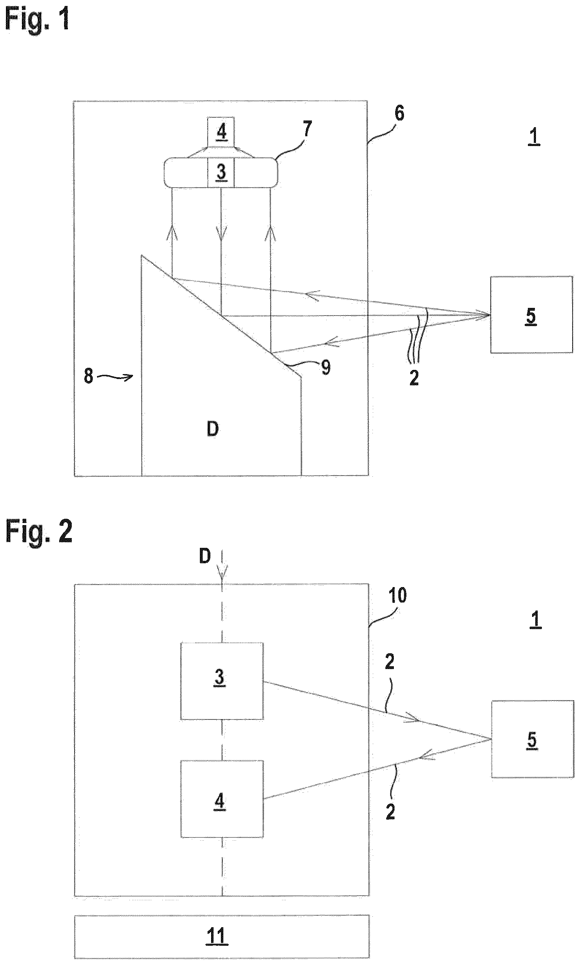

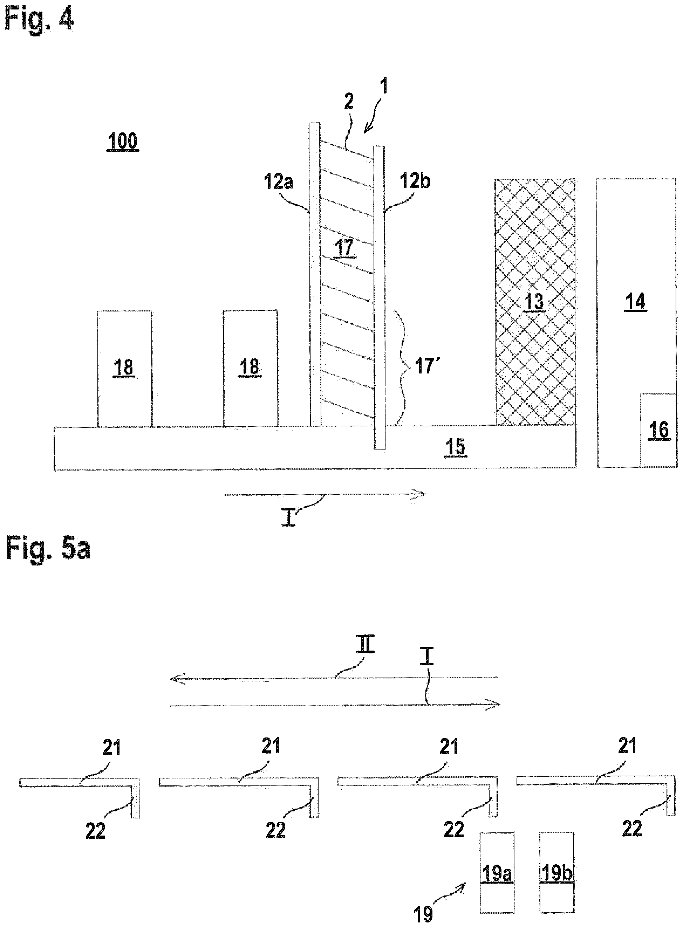

Die Figuren 1 - 3 zeigen Beispiele eines Sensors 1 für eine Überwachungseinrichtung 100, wie in den Figuren 4a,b und 10 - 15 exemplarisch dargestellt ist.

Prinzipiell können die Sensoren 1 als Radarsensoren ausgebildet sein. In den Figuren 1 - 3 sind Sensoren 1 in Form von optischen Sensoren dargestellt.

Figur 1 zeigt ein Ausführungsbeispiel eines optischen Sensors in Form eines Flächendistanzsensors, das heißt eines scannenden Distanzsensors. Zur Durchführung von Distanzmessungen weist der optische Sensor einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor für die Distanzbestimmungen ausgewertet wird.

Wie Figur 1 zeigt, sind die Sensorkomponenten der optischen Sensoren in einem Gehäuse 6 integriert, wobei der Sender 3 sowie der Empfänger 4 mit einer vorgeordneten Empfangsoptik 7 stationär im Gehäuse 6 angeordnet sind. Mit dem optischen Sensor erfolgt eine Objektdetektion in einem flächigen Erfassungsbereich dadurch, dass die Lichtstrahlen 2 mittels einer Ablenkeinheit 8 periodisch abgelenkt werden. Dabei überstreichen die Lichtstrahlen 2 innerhalb einer Periodendauer einen Erfassungsbereich. Die Ablenkeinheit 8 ist motorisch angetrieben und umfasst einen um eine Drehachse D drehbaren Umlenkspiegel 9, an dem die Lichtstrahlen 2 abgelenkt werden.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Generell ist jedem optischen Sensor eine nicht dargestellte Auswerteeinheit zugeordnet, in der die Empfangssignale des Empfängers 4 ausgewertet werden.

Für den Einsatz im Bereich der Sicherheitstechnik sind die optischen Sensoren gemäß der Figuren 1 und 2 als Sicherheitssensoren ausgebildet und weisen einen fehlersicheren Aufbau auf, der beispielsweise durch eine redundante Auswerteeinheit in Form zweier sich zyklisch gegenseitig überwachender Rechnereinheiten realisiert werden kann.

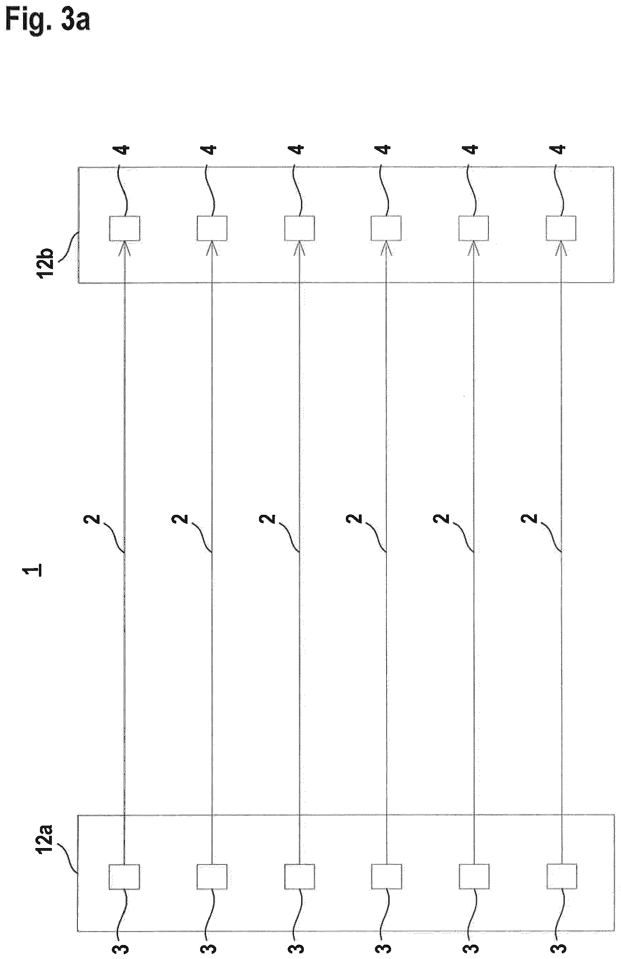

Figur 3a zeigt ein Beispiel eines Sensors 1 in Form eines Lichtvorhangs.

Der Lichtvorhang weist in einem ersten Gehäuse 12a eine Reihenanordnung von Lichtstrahlen 2 emittierenden Sendern 3 und in einem zweiten Gehäuse 12b eine Reihenanordnung von Empfängern 4 auf. Die Lichtstrahlen 2 spannen einen flächigen Überwachungsbereich auf, der in einer vertikalen Ebene orientiert ist und damit senkrecht zur horizontalen Oberfläche des Förderbands der Fördereinrichtung verläuft.

Die Sender 3 werden einzeln nacheinander zyklisch mittels einer nicht dargestellten Sendersteuerung aktiviert. Die Empfänger 4 werden in bekannter Weise optisch auf die Sender 3 synchronisiert.

Die in den Empfängern 4 generierten Empfangssignale werden in einer nicht dargestellten Auswerteeinheit zur Generierung eines binären Schaltsignals ausgewertet. Die Schaltzustände des Schaltsignals geben an, ob sich ein Objekt 5 im Überwachungsbereich befindet oder nicht. Bei freiem Überwachungsbereich treffen die Lichtstrahlen 2 aller Sender 3 ungehindert auf den zugeordneten Empfänger 4. Bei einem Objekteingriff im Überwachungsbereich werden durch das Objekt 5 die Lichtstrahlen 2 wenigstens eines Senders 3 unterbrochen. Zur Erfüllung der sicherheitstechnischen Anforderungen weist die Auswerteeinheit einen redundanten, vorzugsweise zweikanaligen Aufbau auf.

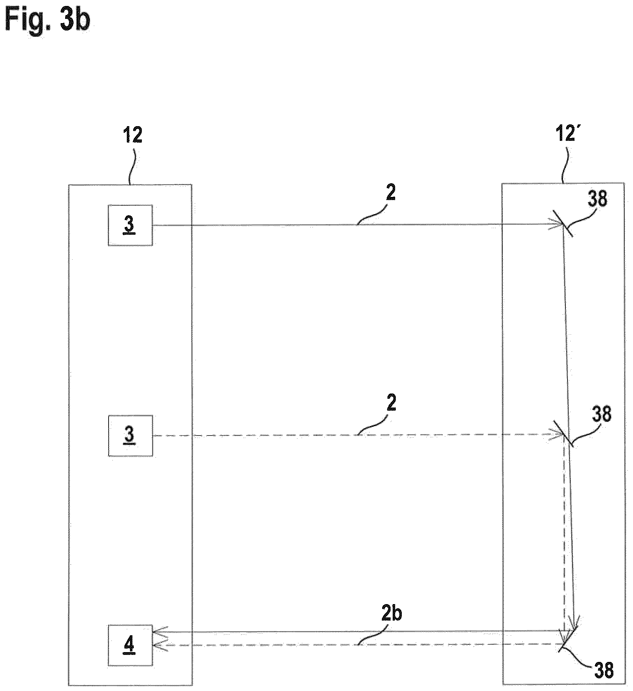

Figur 3b zeigt ein Beispiel einer Variante eines Sensors 1 in Form eines Lichtvorhangs mit Umlenkspiegeln 38.

Der Lichtvorhang weist in einem ersten Gehäuse 12 eine Reihenanordnung von Lichtstrahlen 2 emittierenden Sendern 3 und im gleichen Gehäuse 12 einen Empfänger 4 auf. Generell kann auch eine Reihenanordnung von Empfängern 4 vorgesehen sein. Die Lichtstrahlen 2 spannen einen flächigen Überwachungsbereich auf, der in einer vertikalen Ebene orientiert ist und damit senkrecht zur horizontalen Oberfläche des Förderbands der Fördereinrichtung verläuft.

Im gegenüberliegenden Gehäuse 12' sind Umlenkspiegel 38 angebracht, die die Lichtstrahlen 2 der Sender 3 zu Lichtstrahlen 2b für den Empfänger 4 umlenken.

Die Sender 3 werden einzeln nacheinander zyklisch mittels einer nicht dargestellten Sendersteuerung aktiviert. Der Empfänger 4 wird in bekannter Weise elektrisch oder optisch auf die Sender 3 synchronisiert.

Die in den Empfängern 4 generierten Empfangssignale werden in einer nicht dargestellten Auswerteeinheit zur Generierung eines binären Schaltsignals ausgewertet. Die Schaltzustände des Schaltsignals geben an, ob sich ein Objekt 5 im Überwachungsbereich befindet oder nicht. Bei freiem Überwachungsbereich treffen die Lichtstrahlen 2 aller Sender 3 ungehindert auf den zugeordneten Empfänger 4. Bei einem Objekteingriff im Überwachungsbereich werden durch das Objekt 5 die Lichtstrahlen 2 wenigstens eines Senders 3 unterbrochen. Zur Erfüllung der sicherheitstechnischen Anforderungen weist die Auswerteeinheit einen redundanten, vorzugsweise zweikanaligen Aufbau auf.

Figur 4 zeigt ein Ausführungsbeispiel der erfindungsgemäßen Überwachungseinrichtung 100. Die Überwachungseinrichtung 100 dient zur Absicherung eines Gefahrenbereichs 13 einer Anlage 14. Der Zugang zum Gefahrenbereich 13 erfolgt allein über eine bewegliche Einheit in Form einer Transporteinrichtung 15, die im vorliegenden Fall in Form eines Förderbands ausgebildet ist. Die Transporteinrichtung 15 wird mittels eines nicht dargestellten Antriebs angetrieben. Die Anlage 14 und die Transporteinrichtung 15 werden von einer Sicherheitssteuerung 16 gesteuert.

Der Zugang zu dem Gefahrenbereich 13 wird mittels eines Sensors 1 in Form eines Lichtvorhangs überwacht. Mit den Lichtstrahlen 2 des Lichtvorhangs wird ein Schutzfeld 17 überwacht.

Dringt ein Objekt 5 in das Schutzfeld 17 ein, wird ein binäres Schaltsignal mit einem Schaltzustand generiert, das zur Auslösung einer Sicherheitsfunktion führt. Im vorliegenden Fall wird das Schaltsignal an die Sicherheitssteuerung 16 ausgegeben. Die Sicherheitsfunktion ist dadurch gebildet, dass die Anlage 14 stillgesetzt wird.

Auf der Transporteinrichtung 15 werden zulässige Objekte 5 in Form von Transportgütern 18 in einer Transportrichtung I transportiert. Diese zulässigen Objekte 5 sind nicht gefahrbringend und sollen durch das Schutzfeld 17 der Lichtvorhänge hindurch zur Anlage 14 geführt werden, ohne dass die Sicherheitsfunktion ausgelöst wird.

Hierzu ist eine Überbrückungsfunktion, das heißt Mutingfunktion vorgesehen, mittels derer der Sensor 1 überbrückt wird, so dass er keine Sicherheitsfunktion auslöst, wenn ein Transportgut 18 das Schutzfeld 17 passiert.

Dabei kann das gesamte Schutzfeld 17 überbrückt werden oder, bei einem partiellen Muting, nur der Teil 17' des Schutzfelds 17, innerhalb dessen das Transportgut 18 vorhanden ist. Bei variierenden Konturen der Transportgüter variiert auch der überbrückte Teil 17` des Schutzfelds 17.

Erfindungsgemäß wird die Mutingfunktionen abhängig von einer mit Sensormitteln 19, 20 durchgeführten Wegerfassung gesteuert oder überwacht.

Generell sind die Sensormittel 19, 20 in Form von optischen, magnetischen, induktiven oder kapazitiven Sensormitteln 19, 20 ausgebildet.

Dabei generieren die Sensormittel 19, 20 pulsförmige Sensorsignale.

Somit kann anhand von Sensorsignalen der Sensormittel 19, 20 die Geschwindigkeit der beweglichen Einheit ermittelt werden.

In einer Variante können die Sensoren 19, 20 als Radarsensoren, optische Sensoren oder Ultraschallsensoren ausgebildet sein. Geschwindigkeitssignale und Richtungssignale können damit durch Auswertung des Dopplereffekts, also der Frequenzänderung der reflektierten Wellen gegenüber der ausgesendeten Welle ermittelt werden. Aus dem so ermittelten Geschwindigkeitssignal können Weginformationen durch Aufsummierung des Geschwindigkeitssignals ermittelt werden.

Figur 5a zeigt einen Ausschnitt der Transporteinrichtung 15 mit mehreren Transportbandelementen 21, die mittels des Antriebs in der mit den Pfeilen I, II gekennzeichneten Richtungen bewegt werden. Von den Unterseiten der Transportbandelementen 21 hervorstehende Kanten 22 bilden Markierungselemente, die mit ersten Sensormitteln 19 erfasst werden. Diese ersten Sensormittel 19 weisen im vorliegenden Fall zwei in Förderrichtung der Transporteinrichtung 15 hintereinander angeordnete Sensorelemente 19a, 19b auf.

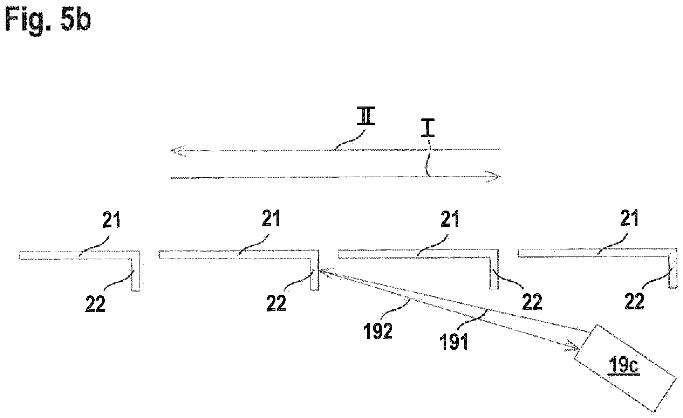

Figur 5b zeigt eine Sensoranordnung mit einem Ultraschallsensor 19c mit einer gesendeten Ultraschallwelle 191 mit einer ersten bestimmten Frequenz und einer empfangenen Ultraschallwelle 192 mit einer durch die Geschwindigkeit der Transporteinrichtung veränderten Frequenz. Aus der Frequenzänderung des empfangenen Signals können sowohl die Richtung als auch die Geschwindigkeit der Transporteinrichtung ermittelt werden. Durch Aufsummierung der Geschwindigkeitswerte können Weginformationen gewonnen werden. Anstelle eines Ultraschallsensors 19c kann auch ein Radarsensor vorgesehen sein.

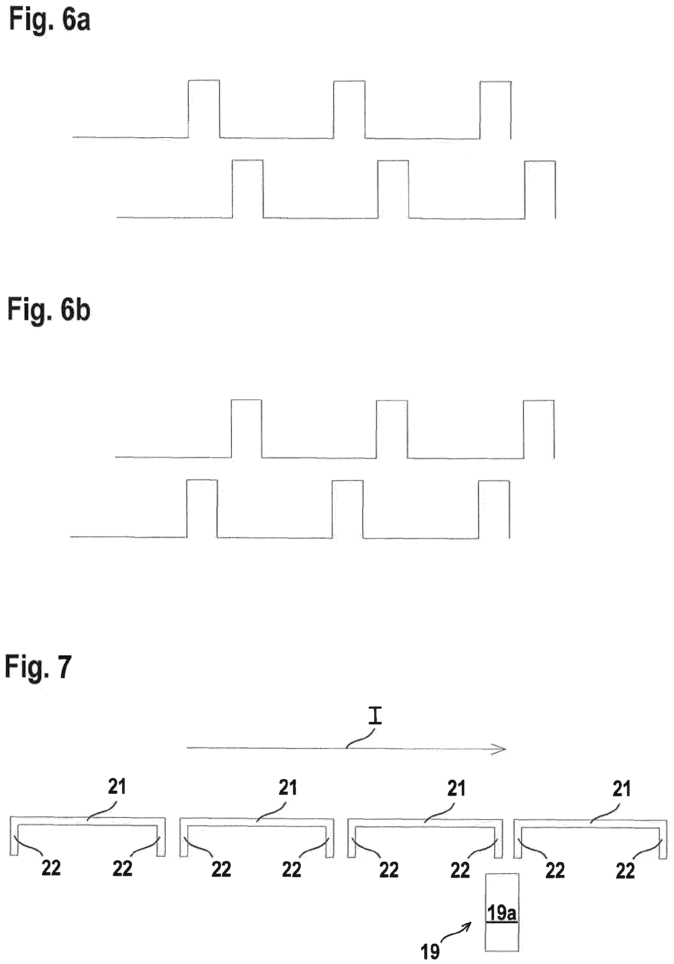

Bei der Abtastung der Markierungselemente werden für die Förderrichtung I die in Figur 6a dargestellten Zeitdiagramme und für die Förderrichtung II die in Figur 6b dargestellten Zeitdiagramme erhalten. Das jeweils obere Zeitdiagramm der Figuren 6a, 6b zeigt die Sensorsignale des Sensorelements 19a, das jeweils untere Zeitdiagramm die Sensorsignale des Sensorelements 19b.

Durch Zählen der pulsförmigen Sensorsignale wird eine Weginformation erhalten, durch die zeitlichen Abstände der Sensorsignale wird die Geschwindigkeit der Transporteinrichtung 15 ermittelt. Durch Auswerten der Reihenfolgen der Sensorsignale der Sensorelemente 19a, 19b ergibt sich die Transportrichtung der Transporteinrichtung.

Durch Überwachung von zeitlichen Abständen oder zeitlicher Verhältnisse und/oder der zeitliche Erwartungshaltung an Pulsbreiten z.B. im Verhältnis zur Periode oder zeitlichen Abstände z.B. im Verhältnis zur Periode können Fehler (z.B. Kurzschluss oder Oszillation) in den Sensorelementen 19a, 19b aufgedeckt werden.

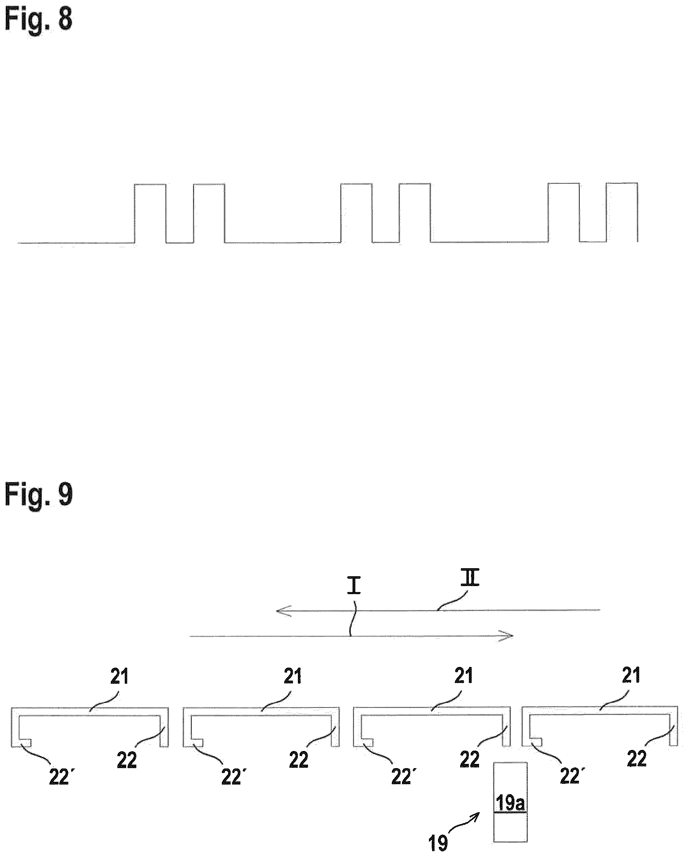

Figur 7 zeigt eine Abwandlung der Ausführungsform gemäß Figur 5. Im Unterschied zu der Ausführungsform gemäß Figur 5 weisen die Sensormittel 19 nur ein Sensorelement 19a auf, so dass in diesem Fall keine Richtungserkennung möglich ist. Die Auswertung des zeitlichen Verlaufs der Sensorsignale 19a (Figur 8) erfolgt ansonsten analog zu der Ausführungsform gemäß den Figuren 6a, 6b.

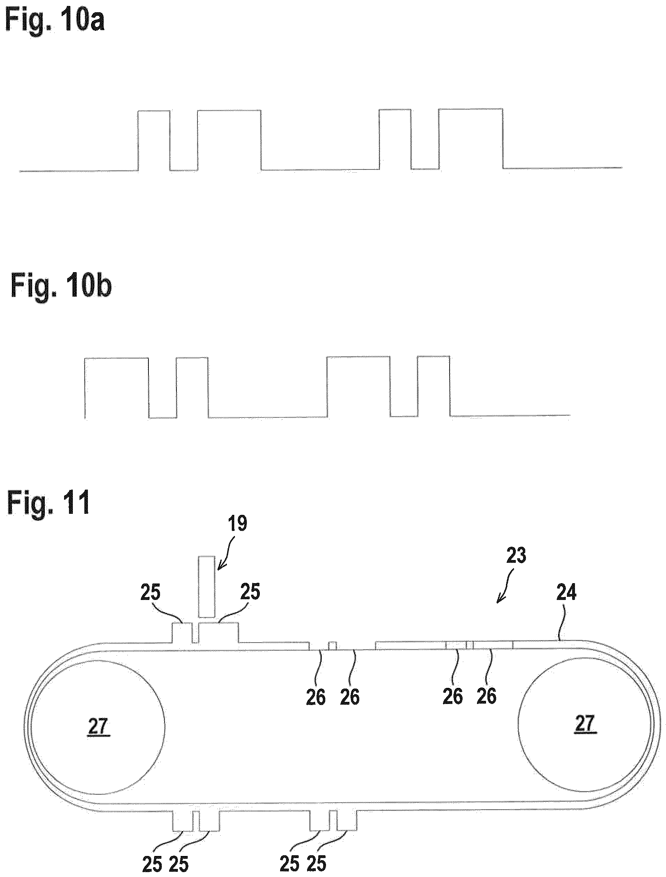

Figur 9 zeigt eine Abwandlung der Ausführungsform gemäß Figur 7 derart, dass die Transportbandelemente 21 unterschiedliche Markierungselemente in Form von Kanten 22, 22` aufweisen. Obwohl die ersten Sensormittel 19 wieder nur ein Sensorelement 19a aufweisen, ist anhand der durch die unterschiedlichen Kanten 22, 22` generierten unterschiedlichen Sensorsignale wieder eine Richtungserkennung möglich. Figur 10a zeigt die Sensorsignale des Sensorelements 19a für die Transportrichtung I. Figur 10b zeigt die Sensorsignale des Sensorelements 19a für die Transportrichtung II.

Die Auswertung der Sensorsignale erfolgt analog zur Ausführungsform der Figuren 6a, 6b.

Figur 11 zeigt eine Variante der Transporteinrichtung 15 mit einem Antrieb in Form eines Zahnriemenantriebs 23 mit einem Zahnriemen 24. Am Zahnriemen 24 können Markierungselemente in Form von Erhebungen 25 oder Vertiefungen 26 vorgesehen sein, die mit ersten Sensormitteln 19 abgetastet werden.

Alternativ können auch Markierungselemente an der Antriebsachse 27 des Zahnriemenantriebs vorgesehen sein.

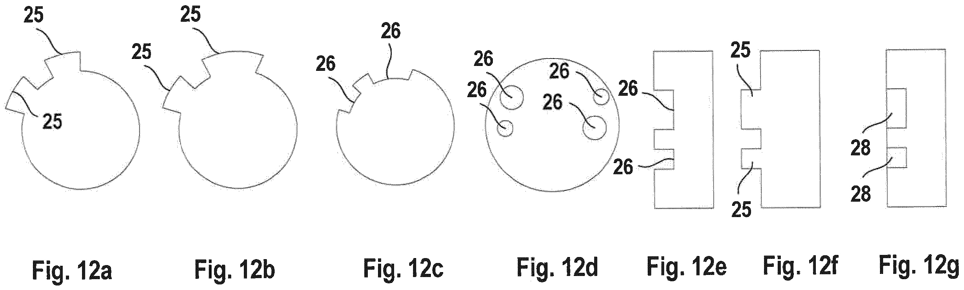

Die Figuren 12a - 12g zeigen unterschiedliche Ausführungsformen derartiger Markierungselemente, wobei die Figuren 12a - 12d eine Draufsicht auf den Vorderradbereich der Antriebsachse 27 zeigen, wogegen die Figuren 12e - 12g Längsschnittdarstellungen zeigen.

Die Figuren 12a, 12b zeigen Geometriestrukturelemente ausbildende Markierungselemente in Form von Erhebungen 25, während die Figuren Markierungselemente in Form von Vertiefungen 26 zeigen. Figur 12g zeigt Markierungselemente in Form von Materialstrukturelementen 28. Diese bilden lokale Bereiche mit anderen Materialeigenschaften als der umgebende Bereich, wobei diese Materialstrukturelemente 28 mit den ersten Sensormitteln 19 erfasst werden können.

Im einfachsten Fall erfolgt die Steuerung der Mutingfunktion, insbesondere die Einleitung und das Beenden des Mutings allein abhängig von der inkrementellen Wegerfassung mittels der ersten Sensormittel 19. Vorteilhaft ist zudem eine Referenzierung der ersten Sensormittel 19 auf Absolutpositionen vorgesehen.

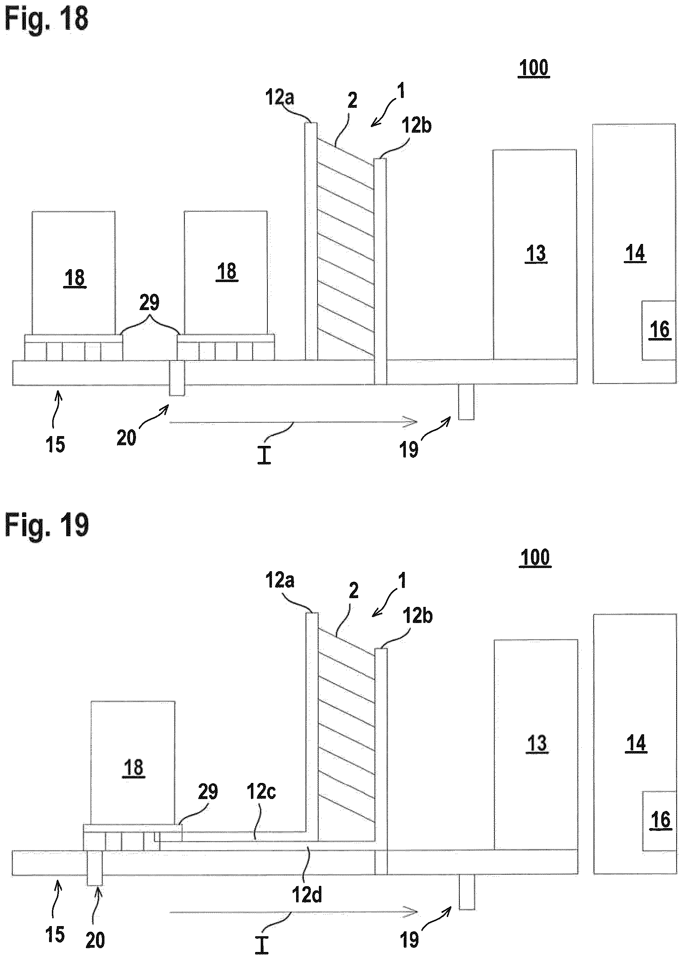

Ein Beispiel hierfür zeigt Figur 18. Dort sind die Transportgüter auf Paletten 29 gelagert. Neben ersten Sensormitteln 19 für eine inkrementelle Wegerfassung sind zweite Sensormittel 20 vorgesehen, mittels derer Palettenfüße der Paletten 29 erfasst werden, wodurch eine absolute Wegreferenz für die einzelnen zulässigen Objekte 5 erhalten wird.

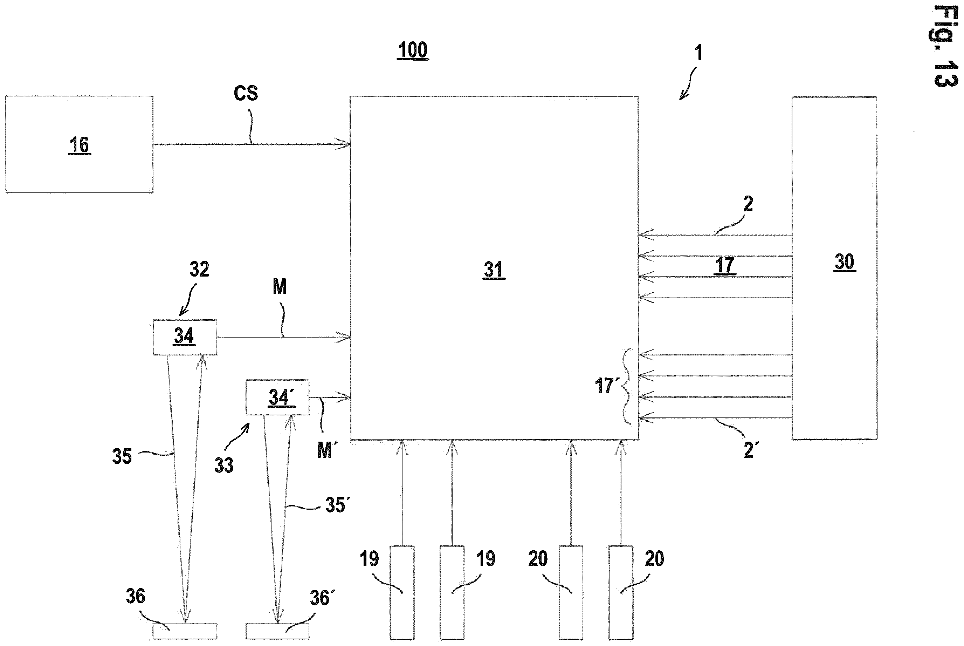

Figur 13 zeigt eine weitere Ausführungsform der erfindungsgemäßen Überwachungseinrichtung 100 in Form eines Blockschaltbilds.

Figur 13 zeigt den Sicherheitssensor in Form des Lichtvorhangs mit einer die Sender 3 aufweisenden Sendereinheit 30 und einer die Empfänger 4 aufweisenden Empfängereinheit 31. In der Empfängereinheit 31 ist ein Controller integriert, der die Auswerteeinheit bildet und die Mutingsteuerung übernimmt.

Die Steuerung 16 der Anlage 14 ist an die Empfängereinheit 31 angeschlossen und liefert ein externes Steuersignal CS an die Empfängereinheit 31.

Weiterhin sind zwei identische, als Reflexionslichtschranken ausgebildete Mutingsensoren 32, 33 vorgesehen, die Mutingsignale M, M` generieren, die ebenfalls in die Empfängereinheit 31 eingelesen werden.

Die Mutingsignale weisen in bekannter Weise jeweils ein Gehäuse 34, 34` mit einem dort integrierten Sendeelement und Empfangselement auf. Vom Sendeelement emittierte Sendelichtstrahlen 35, 35` werden auf einen Reflektor 36, 36` geführt.

Weiterhin werden von ersten Sensormitteln 19 und zweiten Sensormitteln 20 generierte Sensorsignale in die Empfängereinheit 31 eingelesen.

Wie aus Figur 13 ersichtlich, weist der Lichtvorhang neben den Lichtstrahlen 2, die das in einer vertikalen Ebene orientierte Schutzfeld 17 ausbilden, weitere Lichtschranken 2' aus, die in einer horizontalen Ebene verlaufend als Schutzfeld 17` ein Mutingfeld ausbilden.

Die konstruktive Umsetzung hierfür zeigt Figur 19, die eine Erweiterung der Ausführungsform gemäß Figur 18 dahingehend bildet, dass das vertikal orientierte Gehäuse 12a des Lichtvorhangs um einen horizontalen Gehäuseabschnitt 12c erweitert ist. Entsprechend ist das Gehäuse 12b des Lichtvorhangs von einem horizontalen Abschnitt 12d erweitert.

Während in den vertikalen Gehäusen 12a, 12b die das Schutzfeld 17 generierenden Sender 3 und Empfänger 4 angeordnet sind, sind in den horizontalen Gehäuseabschnitten 12c, 12d die das Mutingfeld bildenden Sender 3 und Empfänger 4 integriert. Ansonsten entspricht die Ausführungsform gemäß Figur 19 der Ausführungsform gemäß Figur 18.

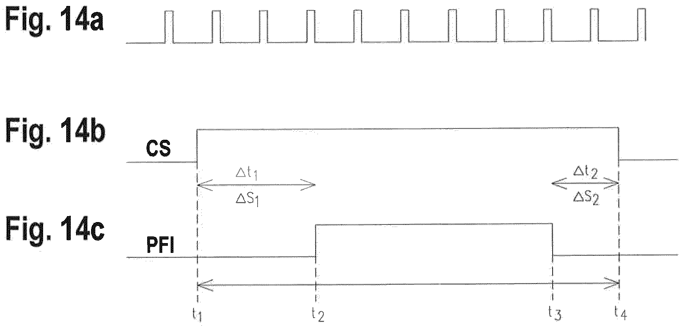

Die Figuren 14a - c zeigen ein erstes Beispiel für die Muting-Steuerung.

Figur 14a zeigt den zeitlichen Verlauf der Sensorsignale der ersten Sensormittel 19. Durch die Abstastung periodisch wiederkehrender Markierungselemente wird mit den ersten Sensormitteln 19 eine periodische Folge von pulsförmigen Sensorsignalen generiert. Diese Pulse markieren kleine Wegabschnitte wodurch die relative Transportpositionen erfasst werden können.

Zur Muting-Steuerung wird von der Sicherheitssteuerung 16 das binäre externe Steuersignal CS eingelesen (Figur 14b).

Sobald das Steuersignal CS vom Signalzustand "0" auf "1" wechselt (Zeitpunkt ti entsprechend einer Transportposition si) wird das Muting eingeleitet.

Weiterhin wird das im Lichtvorhang generierte Schaltsignal PFI (Figur 14c) ausgewertet. Zum Zeitpunkt t₂, entsprechend einer Transportposition s₂ dringt das zulässige Objekt 5, für welches das Muting eingeleitet wurde, in das Schutzfeld 17 ein und wird somit vom Lichtvorhang erfasst, wodurch das Schaltsignal PFI vom Schaltzustand "0" in den Schaltzustand "1" wechselt.

Das Muting wird nur dann aufrecht erhalten, wenn die Positionsdifferenz Δs₁ = s₂ - s₁ unterhalb eines vorgegebenen Grenzwerts liegt. Diese Positionsdifferenz entspricht einer Zeitdifferenz Δt₁, entsprechend der Geschwindigkeit des zulässigen Objekts. Diese Positionsdifferenz Δs₁ wird anhand der Sensorsignale der ersten Sensormittel 19 überwacht. Da mit den ersten Sensormitteln 19 eine Wegerfassung durchgeführt wird, kann die Überwachung auch bei variierenden Geschwindigkeiten der Transporteinrichtung exakt durchgeführt werden.

Das Muting wird dadurch beendet, dass das Steuersignal CS bei einer Transportposition s₄, das heißt zum Zeitpunkt t₄ vom Signalzustand "1" auf "0" wechselt.

Dabei wird anhand der Sensorsignale der ersten Sensormittel 19 die Wegdifferenz Δs₂ = s₄ - s₃ überwacht, wobei t₃ der Zeitpunkt ist, an welchem das Schaltsignal des Lichtvorhangs von "1" auf "0" wechselt, das heißt das zulässige Objekt das Schutzfeld verlässt.

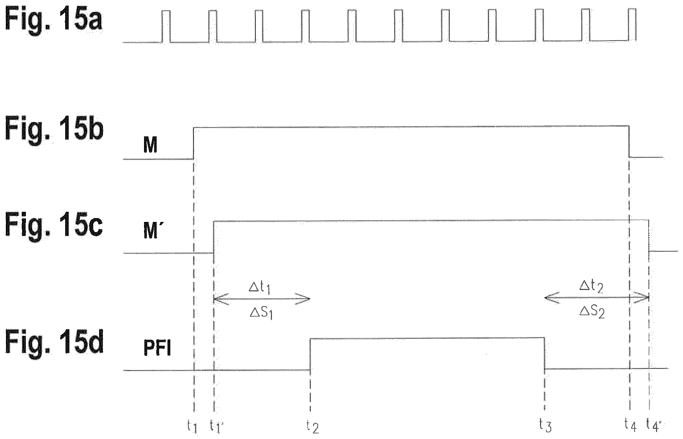

Die Figuren 15a - d zeigen ein zweites Beispiel für die Muting-Steuerung.

Die Sensorsignale der ersten Sensormittel 19 (Figur 15a) entsprechen den Sensorsignalen der ersten Sensormittel 19 gemäß dem Ausführungsbeispiel gemäß Figur 14a.

Im vorliegenden Fall wird das Muting in Abhängigkeit der Mutingsignale M, M' der beiden Mutingsensoren 32, 33 gesteuert. Die Mutingsensoren 32, 33 sind räumlich versetzt in Transportrichtung der Transporteinrichtung 15 vor dem Lichtvorhang angeordnet.

Dementsprechend wechselt der Signalzustand der Mutingsignale 32 M bei Detektion eines zulässigen Objekts 5 zum Zeitpunkt ti von "0" auf "1". Der zweite Mutingsensor 33 erkennt das zulässige Objekt 5 etwas später, so dass der Signalzustand M' dieses Mutingsensors 33 zum Zeitpunkt t'₁ (>ti) von "0" auf "1" wechselt.

Zum Zeitpunkt t'₁, das heißt dann, wenn mit beiden Mutingsensoren 32, 33 das zulässige Objekt 5 erkannt wurde, wird das Muting eingeleitet.

Mit den Sensorsignalen der ersten Sensormittel 19 wird das Zeitintervall t_{'1} - t₁ daraufhin überwacht, dass dieses kleiner als der Zeitabstand zweier benachbarter Pulse des Sensorsignals ist.

Weiterhin wird mit den Sensorsignalen der ersten Sensormittel 19 die Positionsdifferenz Δs₁ = s₂ - s'i auf Einhalten eines Maximalwerts oder in einer Variante sowohl auf die Einhaltung eines Minimalwerts als auch auf die Einhaltung eines Maximalwerts überwacht, wobei s₂ wieder die Position definiert, zu der das Schaltsignal PFI des Lichtvorhangs von "0" auf "1" wechselt.

Entsprechend wird das Muting beendet, wenn die Mutingsignale M, M' bei den Mutingsensoren 32, 33 von "1" auf "0" wechseln.

Dabei wird mittels der Sensorsignale der ersten Sensormittel 19 die Positionsdifferenz Δs₂ = s'₄ - s₃ auf Einhalten eines Maximalwerts oder in einer Variante sowohl auf die Einhaltung eines Minimalwerts als auch auf die Einhaltung eines Maximalwerts überwacht, wobei s₃ der Transportposition des Wechsels des Schaltsignals von "1" auf "0" und die Zeiten t₄, t'₄ die Zeitpunkte des Wechselns der Mutingsignale M, M' von "1" auf "0" definieren.

Anstelle der Mutingsignale M, M' können auch die durch die Lichtstrahlen 2' generierten Signale des Mutingfelds des Lichtvorhangs zur Muting-Steuerung verwendet werden.

Die Figuren 15a - 15d zeigen ein weiteres Beispiel für eine Muting-Steuerung. Das Einleiten und Beenden des Mutings (Figuren 15a - 15c) entspricht der Ausführungsform der Figuren 14a - 14c.

Zusätzlich ist ein Mutingtimeout vorgesehen, bei welchem ein Mutingtimeout-Zeitzählsignal ZZMT (Figur 15d) generiert. Der Zählvorgang beginnt mit Einleiten des Mutings bei ti. Das Mutingtimeout stellt eine Sicherungsfunktion derart dar, dass die Mutingdauer auf einen Höchstwert begrenzt wird. Erreicht das Mutingtimeout-Zeitzählsignal den Höchstwert, wird eine Fehlermeldung generiert, die zum Abschalten der Anlage 14 führt.

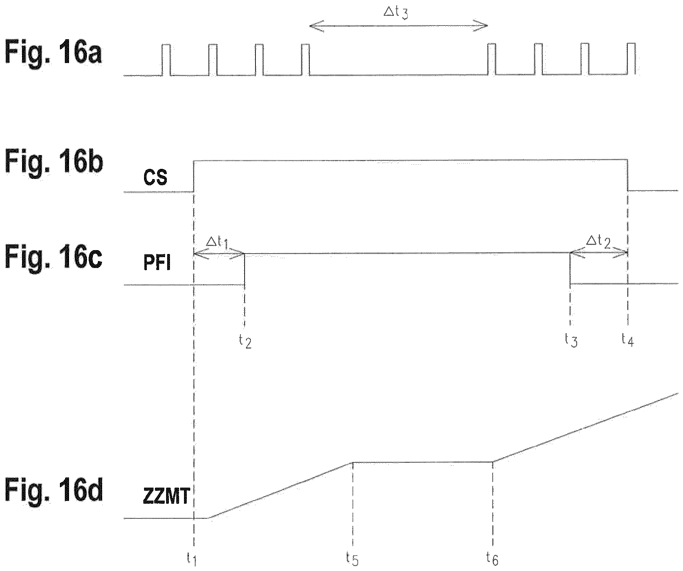

Wie aus Figur 16 erkennbar, steht die Transporteinrichtung 15 während des Zeitintervalls Δt₃ still. Während dieses Zeitintervalls wird das Hochzählen des Signals ZZMT gestoppt. Erst nach Ablauf von Δt'₃ wird das Hochzählen des Signals ZZMT fortgesetzt. Damit wird dem Umstand Rechnung getragen, dass eine stehende Transporteinrichtung 15 mit dem zulässigen Objekt 5 im Schutzfeld 17 des Lichtvorhangs keinen gefahrbringenden Zustand darstellt, so dass das Hochzählen des Signals ZZMT während dieser Zeit nicht erforderlich ist.

Vorteilhaft wird zu Beginn des Zeitintervalls Δt₃ (=t₆ - t₅) das durch das zulässige Objekt 5 verursachte Muster der Schutzfeld-Verletzung gespeichert.

Wird während des Zeitintervalls Δt₃ dann eine Abweichung von diesem gespeicherten Muster der Schutzfeld-Verletzung registriert, liegt ein manipulativer Eingriff im Schutzfeld 17 vor, so dass die Anlage 14 aus Sicherheitsgründen abgeschaltet wird.

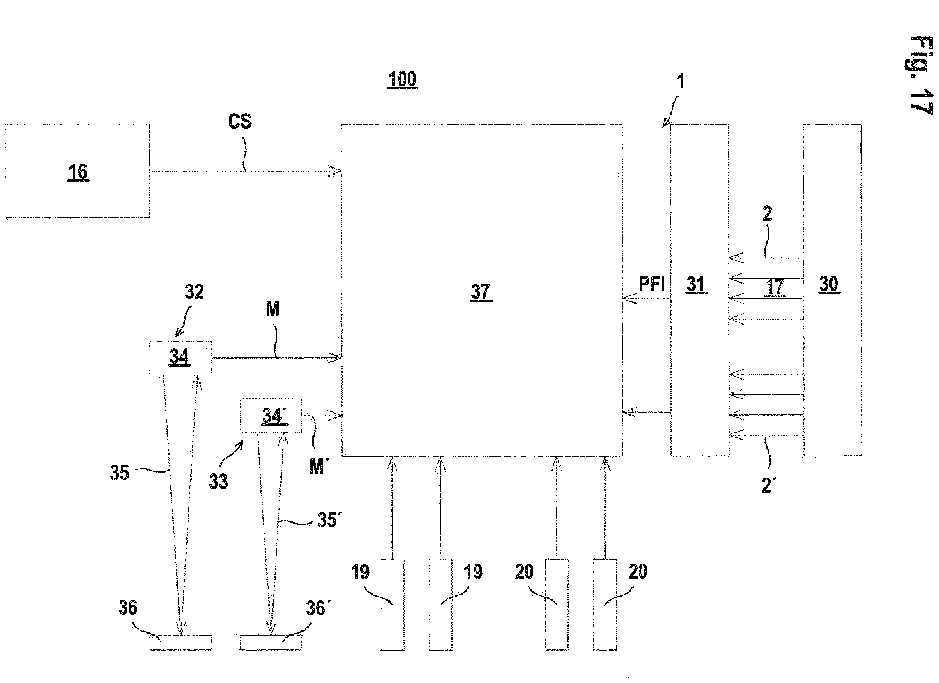

Figur 17 zeigt eine Variante der Ausführungsform gemäß Figur 13. Die Ausführungsform gemäß Figur 17 unterscheidet sich von der Anordnung gemäß Figur 13 nur dadurch, dass die Muting-Steuerung aus der Empfängereinheit 31 herausverlagert ist und in einer separaten Steuereinheit 37 integriert ist.

### Bezugszeichenliste

- (1): Sensor
- (2): Lichtstrahl
- (2`): Lichtstrahl
- (2b): Lichtstrahl
- (3): Sender
- (4): Empfänger
- (5): Objekt
- (6): Gehäuse
- (7): Empfangsoptik
- (8): Ablenkeinheit
- (9): Umlenkspiegel
- (10): Messkopf
- (11): Sockel
- (12): Gehäuse
- (12`): Gehäuse
- (12a): Gehäuse
- (12b): Gehäuse
- (12c): Gehäuse
- (12d): Gehäuse
- (13): Gefahrenbereich
- (14): Anlage
- (15): Transporteinrichtung
- (16): Sicherheitssteuerung
- (17): Schutzfeld
- (17'): Teil
- (18): Transportgut
- (19): Sensormittel
- (19a): Sensorelement
- (19b): Sensorelement
- (19c): Ultraschallsensor
- (20): Sensormittel
- (21): Transportbandelemente
- (22): Kante
- (22`): Kante
- (23): Zahnriemenantrieb
- (24): Zahnriemenantrieb
- (25): Erhebung
- (26): Vertiefung
- (27): Antriebsachse
- (28): Materialstrukturelement
- (29): Palette
- (30): Sendereinheit
- (31): Empfängereinheit
- (32): Mutingsensor
- (33): Mutingsensor
- (34): Gehäuse
- (34`): Gehäuse
- (35): Sendelichtstrahl
- (35`): Sendelichtstrahl
- (36): Reflektor
- (36`): Reflektor
- (37): Steuereinheit
- (38): Umlenkspiegel
- (100): Überwachungseinrichtung
- (191): Schallwelle
- (192): Schallwelle

## Patentansprüche

1. Überwachungseinrichtung (100) mit einem Sensor (1), mittels dessen eine Objektüberwachung in einem Schutzfeld (17) durchgeführt ist, wobei bei Registrieren eines Objekteingriffs im Schutzfeld (17) eine Sicherheitsfunktion ausgelöst ist, und wobei Mittel zur Generierung einer Überbrückungsfunktion vorgesehen sind, mittels derer wenigstens ein Teil (17') des Schutzfelds (17) überbrückt ist, so dass dort ein Objekteingriff nicht zur Auslösung der Sicherheitsfunktion führt, **dadurch gekennzeichnet, dass** Sensormittel (19, 20) zur Wegerfassung einer beweglichen Einheit vorgesehen sind, in dem wiederkehrend in deren Erfassungsbereich geführte Markierungselemente der beweglichen Einheit detektiert werden, und dass die Überbrückungsfunktion anhand der Wegerfassung gesteuert und/oder überwacht ist.

2. Überwachungseinrichtung (100) nach Anspruch 1, **dadurch gekennzeichnet, dass** die bewegliche Einheit von einer Transporteinrichtung (15) gebildet ist, und dass erste Sensormittel (19) vorgesehen sind, mittels derer durch Erfassung von Markierungselementen an der Transporteinrichtung (15) oder an einem Antriebsstrang der Transporteinrichtung (15) eine inkrementelle Wegerfassung durchgeführt wird.

3. Überwachungseinrichtung (100) nach Anspruch 1, **dadurch gekennzeichnet, dass** die bewegliche Einheit von einer Transporteinrichtung (15) gebildet ist, und dass erste Sensormittel (19) vorgesehen sind, mittels derer durch Erfassung von Markierungselementen an der Transporteinrichtung (15) oder an einem Antriebsstrang der Transporteinrichtung (15) eine Geschwindigkeit durch Ausnutzung des Dopplereffekts erfasst wird und/oder aus der gemessenen Geschwindigkeit ein Weg aufsummiert wird.

4. Überwachungseinrichtung (100) nach einem der Ansprüche 1 bis 3, **dadurch gekennzeichnet, dass** zweite Sensormittel (20) vorgesehen sind, mittels derer durch Erfassung von Referenzelementen eine absolute Wegreferenz generiert wird.

5. Überwachungseinrichtung (100) nach Anspruch 3, **dadurch gekennzeichnet, dass** die Referenzelemente von Elementen von auf der Transporteinrichtung (15) transportierten zulässigen Objekten (5) gebildet sind, wobei die Überbrückungsfunktion so ausgebildet ist, dass die zulässigen Objekte (5) das Schutzfeld (17) passieren, ohne dass die Sicherheitsfunktion ausgelöst wird.

6. Überwachungseinrichtung (100) nach einem der Ansprüche 1 - 5, **dadurch gekennzeichnet, dass** der Sensor (1) ein Sicherheitssensor ist.

7. Überwachungseinrichtung (100) nach einem der Ansprüche 1 - 6, **dadurch gekennzeichnet, dass** der Sensor (1) ein optischer Sensor oder ein Radarsensor ist.

8. Überwachungseinrichtung (100) nach Anspruch 7, **dadurch gekennzeichnet, dass** der Sensor (1) ein Lichtvorhang oder ein Flächendistanzsensor ist.

9. Überwachungseinrichtung (100) nach einem der Ansprüche 1 - 8, **dadurch gekennzeichnet, dass** die Sensormittel (19, 20) in Form von optischen, magnetischen, induktiven, kapazitiven Sensormitteln (19, 20), Radar- oder Schallsensoren ausgebildet sind.

10. Überwachungseinrichtung (100) nach einem der Ansprüche 1 - 9, **dadurch gekennzeichnet, dass** die Markierungselemente und/oder die ersten Sensormittel (19) für eine Richtungserkennung der beweglichen Einheit ausgebildet sind.

11. Überwachungseinrichtung (100) nach Anspruch 10, **dadurch gekennzeichnet, dass** die Markierungselemente eine Folge von Geometriestrukturelementen und/oder Materialstrukturelementen (28) aufweisen, die mittels der ersten Sensormittel (19) seriell erfasst werden.

12. Überwachungseinrichtung (100) nach einem der Ansprüche 10 oder 11, **dadurch gekennzeichnet, dass** die ersten Sensormittel (19) jeweils wenigstens zwei in Bewegungsrichtung der beweglichen Einheit hintereinander angeordnete Sensorelemente (19a, 19b) aufweisen.

13. Überwachungseinrichtung (100) nach einem der Ansprüche 1 - 12, **dadurch gekennzeichnet, dass** anhand von Sensorsignalen der Sensormittel (19, 20) die Geschwindigkeit der beweglichen Einheit ermittelt wird.

14. Überwachungseinrichtung (100) nach einem der Ansprüche 1 - 13, **dadurch gekennzeichnet, dass** die Sensormittel (19, 20) pulsförmige Sensorsignale generieren.

15. Überwachungseinrichtung (100) nach einem der Ansprüche 1 - 14, **dadurch gekennzeichnet, dass** die Steuerung der Überbrückungsfunktion ein Einleiten und/oder Beenden eines Muting umfasst.

16. Überwachungseinrichtung (100) nach einem der Ansprüche 1 - 15, **dadurch gekennzeichnet, dass** die Steuerung der Überbrückungsfunktion die Vorgabe unterschiedlicher überbrückter Teil-Schutzfelder umfasst.

17. Überwachungseinrichtung (100) nach einem der Ansprüche 15 oder 16, **dadurch gekennzeichnet, dass** die Steuerung der Überbrückungsfunktion abhängig von mit den Sensormitteln (19, 20) generierten Weg-, Geschwindigkeits- und/oder Richtungssignalen erfolgt.

18. Überwachungseinrichtung (100) nach einem der Ansprüche 15 - 17, **dadurch gekennzeichnet, dass** die Steuerung der Überbrückungsfunktion abhängig von externen Signalen einer Steuerung und/oder von Mutingsensoren (32, 33) erfolgt.

19. Überwachungseinrichtung (100) nach einem der Ansprüche 15 - 18, **dadurch gekennzeichnet, dass** die Steuerung der Überbrückungsfunktion abhängig von Sensorsignalen des Sensors (1) erfolgt.

20. Überwachungseinrichtung (100) nach einem der Ansprüche 17 oder 18, **dadurch gekennzeichnet, dass** Signale zur Steuerung der Überbrückungsfunktion mittels der Sensormittel (19, 20) zeitfensterüberwacht oder wegfensterüberwacht werden.

21. Überwachungseinrichtung (100) nach einem der Ansprüche 15 - 20, **dadurch gekennzeichnet, dass** ein zeitfenster- oder wegfensterüberwachtes Mutingtimeout vorgebbar ist.

22. Überwachungseinrichtung (100) nach Anspruch 21, **dadurch gekennzeichnet, dass** ein zeitfensterüberwachtes Mutingtimeout ausgesetzt wird, wenn eine aus Sensorsignalen der Sensormittel (19, 20) bestimmte Geschwindigkeit der beweglichen Einheit einen Grenzwert unterschreitet.

23. Überwachungseinrichtung (100) nach einem der Ansprüche 15 - 22, **dadurch gekennzeichnet, dass** ein Muting nur dann aufrechterhalten wird, wenn abhängig von mit den Sensormitteln (19, 20) bestimmten Wegsignalen eine bestimmte Folge von Schutzfeld-Unterbrechungsmustern registriert wird.

24. Verfahren zum Betrieb einer Überwachungseinrichtung (100) mit einem Sensor (1), mittels dessen eine Objektüberwachung in einem Schutzfeld (17) durchgeführt wird, wobei bei Registrieren eines Objekteingriffs im Schutzfeld (17) eine Sicherheitsfunktion ausgelöst wird, und wobei Mittel zur Generierung einer Überbrückungsfunktion vorgesehen sind, mittels derer wenigstens ein Teil (17') des Schutzfelds (17) überbrückt wird, so dass dort ein Objekteingriff nicht zur Auslösung der Sicherheitsfunktion führt, **dadurch gekennzeichnet, dass** Sensormittel (19, 20) zur Wegerfassung einer beweglichen Einheit vorgesehen sind, in dem wiederkehrend in deren Erfassungsbereich geführte Markierungselemente der beweglichen Einheit detektiert werden, und dass die Überbrückungsfunktion anhand der Wegerfassung gesteuert und/oder überwacht ist.

## Claims

1. A monitoring device (100) having a sensor (1) by means of which object monitoring is carried out in a protective field (17), a safety function being triggered when an object intrusion is registered in the protective field (17), and means being provided for generating a bridging function by means of which at least a part (17') of the protective field (17) is bridged, so that object intervention there does not lead to the triggering of the safety function, **characterised in that** sensor means (19, 20) are provided for detecting the path of a movable unit, in which marking elements of the movable unit which are repeatedly guided in its detection range are detected, and **in that** the bridging function is controlled and/or monitored on the basis of the path detection.

2. A monitoring device (100) according to claim 1, **characterised in that** the movable unit is formed by a transport device (15), and **in that** first sensor means (19) are provided, by means of which an incremental path detection is carried out by detecting marking elements on the transport device (15) or on a drive train of the transport device (15).

3. A monitoring device (100) according to claim 1, **characterised in that** the movable unit is formed by a transport device (15), and **in that** first sensor means (19) are provided, by means of which a speed is detected by exploiting the Doppler effect by detecting marking elements on the transport device (15) or on a drive train of the transport device (15) and/or a distance is added up from the measured speed.

4. A monitoring device (100) according to one of claims 1 to 3, **characterised in that** second sensor means (20) are provided, by means of which an absolute path reference is generated by detecting reference elements.

5. A monitoring device (100) according to claim 3, **characterised in that** the reference elements are formed by elements of permissible objects (5) transported on the transport device (15), the bridging function being designed such that the permissible objects (5) pass through the protective field (17) without the safety function being triggered.

6. A monitoring device (100) according to one of claims 1 to 5, **characterised in that** the sensor (1) is a safety sensor.

7. A monitoring device (100) according to one of claims 1 to 6, **characterised in that** the sensor (1) is an optical sensor or a radar sensor.

8. A monitoring device (100) according to claim 7, **characterised in that** the sensor (1) is a light curtain or an area distance sensor.

9. A monitoring device (100) according to one of claims 1 to 8, **characterised in that** the sensor means (19, 20) are in the form of optical, magnetic, inductive, capacitive sensor means (19, 20), radar or sound sensors.

10. A monitoring device (100) according to one of claims 1 to 9, **characterised in that** the marking elements and/or the first sensor means (19) are designed for direction detection of the moving unit.

11. A monitoring device (100) according to claim 10, **characterised in that** the marking elements have a sequence of geometry structural elements and/or material structural elements (28) which are detected serially by means of the first sensor means (19).

12. A monitoring device (100) according to one of claims 10 or 11, **characterised in that** the first sensor means (19) each have at least two sensor elements (19a, 19b) arranged one behind the other in the direction of movement of the movable unit.

13. A monitoring device (100) according to one of claims 1 to 12, **characterised in that** the speed of the moving unit is determined by means of sensor signals from the sensor means (19, 20).

14. A monitoring device (100) according to one of claims 1 to 13, **characterised in that** the sensor means (19, 20) generate pulse-shaped sensor signals.

15. A monitoring device (100) according to one of claims 1 to 14, **characterised in that** the control of the bridging function comprises an initiation and/or termination of a muting.

16. A monitoring device (100) according to one of claims 1 to 15, **characterised in that** the control of the bridging function comprises the specification of different bridged partial protective fields.

17. A monitoring device (100) according to one of claims 15 or 16, **characterised in that** the bridging function is controlled as a function of displacement, speed and/or direction signals generated by the sensor means (19, 20).

18. A monitoring device (100) according to one of claims 15 to 17, **characterised in that** the bridging function is controlled as a function of external signals from a controller and/or muting sensors (32, 33).

19. A monitoring device (100) according to one of claims 15 to 18, **characterised in that** the bridging function is controlled as a function of sensor signals from the sensor (1).

20. A monitoring device (100) according to one of claims 17 or 18, **characterised in that** signals for controlling the bridging function are monitored by means of the sensor means (19, 20) using time windows or path windows.

21. A monitoring device (100) according to one of claims 15 to 20, **characterised in that** a muting timeout monitored by a time window or path window can be preset.

22. A monitoring device (100) according to claim 21, **characterised in that** a muting timeout monitored by a time window is suspended when a speed of the moving unit determined from sensor signals of the sensor means (19, 20) falls below a limit value.

23. A monitoring device (100) according to one of claims 15 to 22, **characterised in that** muting is only maintained if a specific sequence of protective field interruption patterns is registered as a function of path signals determined by the sensor means (19, 20).

24. A method for operating a monitoring device (100) with a sensor (1), by means of which object monitoring is carried out in a protective field (17), wherein a safety function is triggered when an object intrusion is registered in the protective field (17), and wherein means are provided for generating a bridging function by means of which at least a part (17') of the protective field (17) is bridged, so that object intervention there does not lead to the triggering of the safety function, **characterised in that** sensor means (19, 20) are provided for detecting the path of a movable unit, in which marking elements of the movable unit which are repeatedly guided in its detection range are detected, and **in that** the bridging function is controlled and/or monitored on the basis of the path detection.

## Revendications

1. Dispositif de surveillance (100) comportant un capteur (1) permettant de surveiller des objets dans un champ de protection (17), une fonction de sécurité étant déclenchée lorsqu'une intrusion d'objet est enregistrée dans le champ de protection (17), et des moyens étant prévus pour générer une fonction de pontage au moyen de laquelle au moins une partie (17') du champ de protection (17) est pontée, afin que l'intervention d'un objet n'entraîne pas le déclenchement de la fonction de sécurité, **caractérisé par le fait que** des capteurs (19, 20) sont prévus pour détecter la trajectoire d'une unité mobile, dans laquelle sont détectés les éléments de marquage de l'unité mobile qui sont guidés de manière répétée dans son champ de détection, et **par le fait que** la fonction de pontage est commandée et/ou surveillée sur la base de la détection de la trajectoire.

2. Dispositif de surveillance (100) selon la revendication 1, **caractérisé en ce que** l'unité mobile est formée par un dispositif de transport (15), et **en ce que** des premiers moyens de détection (19) sont prévus, au moyen desquels une détection de trajectoire incrémentale est effectuée en détectant des éléments de marquage sur le dispositif de transport (15) ou sur un train d'entraînement du dispositif de transport (15).

3. Dispositif de surveillance (100) selon la revendication 1, **caractérisé en ce que** l'unité mobile est formée par un dispositif de transport (15), et **en ce que** des premiers moyens de détection (19) sont prévus, au moyen desquels une vitesse est détectée en exploitant l'effet Doppler par la détection d'éléments de marquage sur le dispositif de transport (15) ou sur un train d'entraînement du dispositif de transport (15) et/ou une distance est additionnée à partir de la vitesse mesurée.

4. Dispositif de surveillance (100) selon l'une des revendications 1 à 3, **caractérisé par** la présence de seconds moyens de détection (20) permettant de générer une référence de trajectoire absolue en détectant des éléments de référence.

5. Dispositif de surveillance (100) selon la revendication 3, **caractérisé par le fait que** les éléments de référence sont formés par des éléments d'objets autorisés (5) transportés sur le dispositif de transport (15), la fonction de pontage étant conçue de manière à ce que les objets autorisés (5) traversent le champ de protection (17) sans que la fonction de sécurité ne soit déclenchée.

6. Dispositif de surveillance (100) selon l'une des revendications 1 à 5, **caractérisé par le fait que** le capteur (1) est un capteur de sécurité.

7. Dispositif de surveillance (100) selon l'une des revendications 1 à 6, **caractérisé par le fait que** le capteur (1) est un capteur optique ou un capteur radar.

8. Dispositif de surveillance (100) selon la revendication 7, **caractérisé par le fait que** le capteur (1) est un rideau lumineux ou un capteur de distance.

9. Dispositif de surveillance (100) selon l'une des revendications 1 à 8, **caractérisé par le fait que** les moyens de détection (19, 20) se présentent sous la forme de capteurs optiques, magnétiques, inductifs, capacitifs (19, 20), de radars ou de capteurs sonores.

10. Dispositif de surveillance (100) selon l'une des revendications 1 à 9, **caractérisé par le fait que** les éléments de marquage et/ou les premiers moyens de détection (19) sont conçus pour la détection de la direction de l'unité mobile.

11. Dispositif de surveillance (100) selon la revendication 10, **caractérisé en ce que** les éléments de marquage ont une séquence d'éléments structurels de géométrie et/ou d'éléments structurels de matériau (28) qui sont détectés en série au moyen des premiers moyens de détection (19).

12. Dispositif de surveillance (100) selon l'une des revendications 10 ou 11, **caractérisé par le fait que** les premiers moyens de détection (19) comportent chacun au moins deux éléments de détection (19a, 19b) disposés l'un derrière l'autre dans la direction du mouvement de l'unité mobile.

13. Dispositif de surveillance (100) selon l'une des revendications 1 à 12, **caractérisé par le fait que** la vitesse de l'unité mobile est déterminée au moyen des signaux des capteurs (19, 20).

14. Dispositif de surveillance (100) selon l'une des revendications 1 à 13, **caractérisé par le fait que** les moyens de détection (19, 20) génèrent des signaux de détection en forme d'impulsion.

15. Dispositif de surveillance (100) selon l'une des revendications 1 à 14, **caractérisé par le fait que** la commande de la fonction de pontage comprend l'initiation et/ou l'arrêt d'une inhibition.

16. Dispositif de surveillance (100) selon l'une des revendications 1 à 15, **caractérisé par le fait que** la commande de la fonction de pontage comprend la spécification de différents champs de protection partiels pontés.

17. Dispositif de surveillance (100) selon l'une des revendications 15 ou 16, **caractérisé par le fait que** la fonction de pontage est commandée en fonction des signaux de déplacement, de vitesse et/ou de direction générés par les moyens de détection (19, 20).

18. Dispositif de surveillance (100) selon l'une des revendications 15 à 17, **caractérisé par le fait que** la fonction de pontage est commandée en fonction de signaux externes provenant d'un dispositive de commande et/ou de capteurs d'inhibition (32, 33).

19. Dispositif de surveillance (100) selon l'une des revendications 15 à 18, **caractérisé par le fait que** la fonction de pontage est commandée en fonction des signaux du capteur (1).

20. Dispositif de surveillance (100) selon l'une des revendications 17 ou 18, **caractérisé par le fait que** les signaux de commande de la fonction de pontage sont surveillés au moyen des capteurs (19, 20) en utilisant des fenêtres temporelles ou des fenêtres de parcours.

21. Dispositif de surveillance (100) selon l'une des revendications 15 à 20, **caractérisé par le fait qu'**un délai d'inhibition commandé par une fenêtre temporelle ou une fenêtre de cheminement peut être prédéfini.

22. Dispositif de surveillance (100) selon la revendication 21, **caractérisé en ce qu'**une temporisation d'inhibition surveillée par une fenêtre temporelle est suspendue lorsqu'une vitesse de l'unité mobile déterminée à partir des signaux des capteurs des moyens de détection (19, 20) tombe en dessous d'une valeur limite.

23. Dispositif de surveillance (100) selon l'une des revendications 15 à 22, **caractérisé par le fait que** l'inhibition n'est maintenue que si une séquence spécifique de modèles d'interruption du champ de protection est enregistrée en fonction des signaux de trajectoire déterminés par les moyens de détection (19, 20).

24. Procédé de fonctionnement d'un dispositif de surveillance (100) doté d'un capteur (1), permettant de surveiller des objets dans un champ de protection (17), dans lequel une fonction de sécurité est déclenchée lorsqu'une intrusion d'objet est enregistrée dans le champ de protection (17), et dans lequel des moyens sont prévus pour générer une fonction de pontage au moyen de laquelle au moins une partie (17') du champ de protection (17) est pontée, afin que l'intervention d'un objet n'entraîne pas le déclenchement de la fonction de sécurité, **caractérisé par le fait que** des capteurs (19, 20) sont prévus pour détecter la trajectoire d'une unité mobile, dans laquelle sont détectés les éléments de marquage de l'unité mobile qui sont guidés de manière répétée dans son champ de détection, et **par le fait que** la fonction de pontage est commandée et/ou surveillée sur la base de la détection de la trajectoire.
